# EUROPEAN PATENT SPECIFICATION

(11) **EP 2 216 084 B1**
(45) Date of publication and mention of the grant of the patent: **18.06.2014**
(21) Application number: 08853490.4
(22) Date of filing: 01.10.2008
(51) Int. Cl.: B01D 39/20, C04B 37/00, B01D 46/00, F01N 3/02, C04B 38/00, F01N 3/022, B28B 17/00, B28B 1/00

(54) **METHOD FOR BONDING PLUGGED HONEYCOMB STRUCTURES**
KLEBEVERFAHREN FÜR ANGESTECKTEN WABENSTRUKTUREN
PROCÉDÉ DE LIAISON DE STRUCTURES EN NID D'ABEILLE ATTACHEES

(30) Priority: 28.11.2007 JP 2007307284
(43) Date of publication of application: 11.08.2010
(73) Proprietor: NGK Insulators, Ltd., Nagoya-city, Aichi 467-8530 (JP)
(72) Inventor: INOUE, Jun, Nagoya-shi Aichi 467-8530 (JP)
(74) Representative: Paget, Hugh Charles Edward
(86) International application number: PCT/JP2008/067839
(87) International publication number: WO 2009/069378

(56) References cited:
- EP-A1- 0 433 582
- WO-A1-2004/106702
- WO-A1-2006/126278
- JP-A- 59 177 114
- JP-A- 2007 230 855
- US-A- 4 759 892
- US-A1- 2002 135 107

## Description

### Technical Field

The present invention relates to a method for bonding plugged honeycomb structures. More specifically, the present invention relates to a method for bonding plugged honeycomb structures, the method being capable of efficiently inhibiting the direction of the end face of a plugged honeycomb structure from being reversed when a plurality of plugged honeycomb structures each having different sizes of the cell opening between one end face and the other end face are bonded together.

### Background Art

In various fields of chemistry, electric power, iron and steel, and the like, there is employed a ceramic plugged honeycomb structure excellent in thermal resistance and corrosion resistance as a carrier for a catalytic device or a filter used for environmental measures, collection of specific substances, or the like. In particular, recently, a plugged honeycomb structure has a strong demand as a diesel particulate filter (DPF) for trapping particulate matter (PM) discharged from a diesel engine. As a material for a honeycomb structure used at high temperature in a corrosive gas atmosphere, silicon carbide (SiC) excellent in thermal resistance and chemical stability is suitably used.

Regarding a plugged honeycomb structure formed with silicon carbide as the framework, in the case of manufacturing a structure having a predetermined size or larger, there is a method in which a plurality of plugged honeycomb structures are manufactured as segments and bonded together to obtain a large plugged honeycomb structure. The plugged honeycomb structure segments are bonded by the use of a bonding material, which is applied on side faces of predetermined segments to bond a plurality of segments together at the side faces (see Patent Document 1).

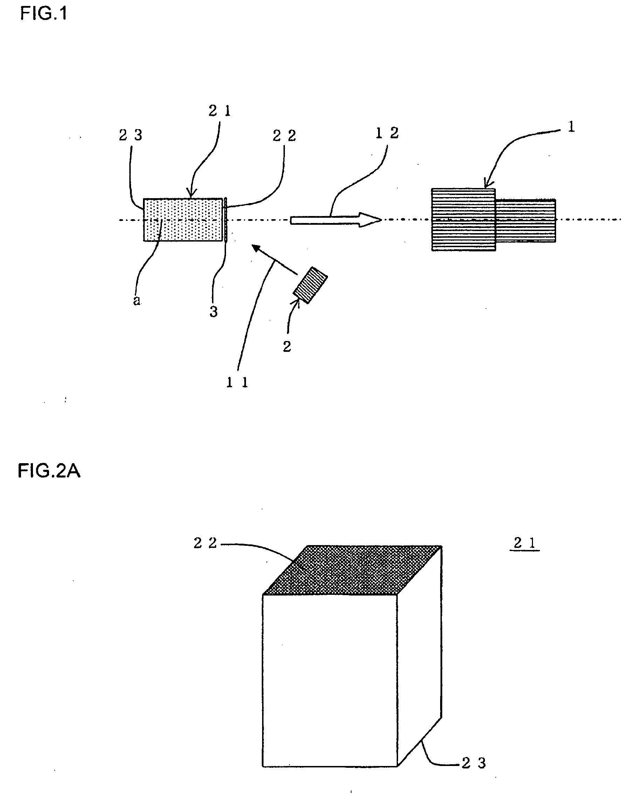

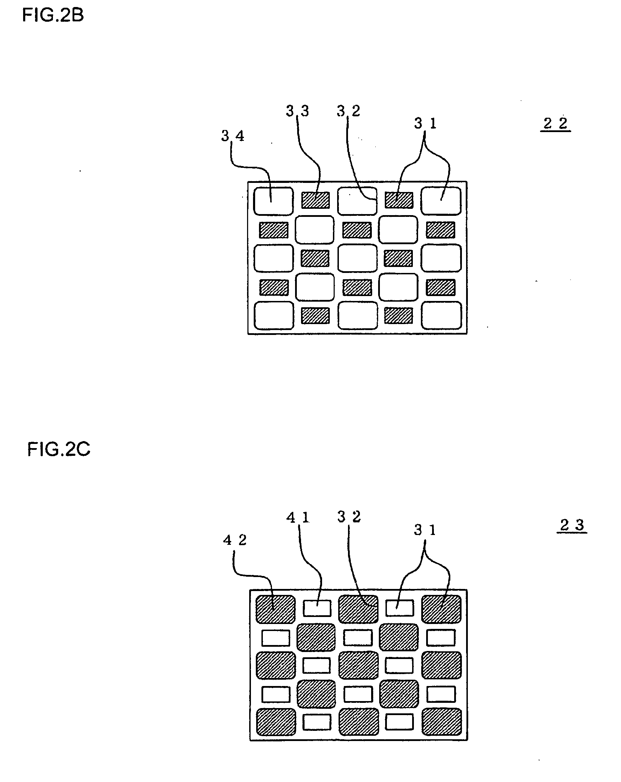

On the other hand, when the plugged honeycomb structure is used as a filter, particulate matter and the like in the target fluid to be treated deposit on the filter with the passage of time to increase pressure loss. In order to reduce the increase in the pressure loss by such a change with the passage of time, as shown in Figs. 2A to 2C, there is used a plugged honeycomb structure 21 where the cell opening (cell opening on inflow side) of the end face (inflow end face) 22 on the side where the fluid to be treated flows in is larger than the cell opening (cell opening on outflow side) of the end face (outflow end face) 23 on the side where the fluid to be treated flows out. The size of the cell opening means the area of a cell opening on an end face, and, in the case that the cross section (cell cross section) perpendicular to the central axis of the cell is fixed between both the end faces of a honeycomb structure, it is the same as the cross-sectional area of a cell cross section. Fig. 2A is a perspective view schematically showing a plugged honeycomb structure where the size of the cell opening of the inflow end face is larger than the cell opening of the outflow end face. Fig. 2B is an enlarged plan view showing a part of the inflow end face 22 of a plugged honeycomb structure 21 where the size of the cell opening of the inflow end face 22 is larger than the cell opening of the outflow end face 23. Fig. 2C is a plan view showing a part of the outflow end face 23 of a plugged honeycomb structure 21 where the size of the cell opening of the inflow end face 22 is larger than the cell opening of the outflow end face 23. When the plugged honeycomb structure 21 having end surfaces having the structures shown in Figs. 2B and 2C is provided with porous partition walls 32 separating and forming a plurality of cells 31 functioning as fluid passages, and predetermined cells each open on one side end portion and plugged on the other side end portion and the other cells each plugged on one side end portion and open on the other side end portion are alternately disposed. Further, each of the predetermined cells has a different size (cross-sectional area) of a cross section (cell cross section) perpendicular to the central axis of the cell from each of the other cells.

As shown in Fig. 2B, in an inflow end face 22 on the side where a fluid to be treated flows in, plugging portions (inflow side plugging portions) 33 are formed in end portions of the cells 31 on the side where the cell cross section is small in the cells 31 separated and formed by the partition walls 32, and the end portions of the cells 31 on the side where the cell cross section is large allow a fluid to be treated to flow in as the opening (inflow side cell opening) 34. In addition, as shown in Fig. 2C, in the outflow end face 23 on the side where a fluid to be treated flows out, plugging portions (outflow side plugging portions) 41 are formed in end portions of the cells 31 on the side where the cell cross section is large in the cells 31 separated and formed by the partition walls 32, and the end portions of the cells 31 on the side where the cell cross section is small allow a fluid to be treated to flow out as the opening (outflow side cell opening) 42.

Thus, by making the size (area) of the cell opening (cell cross section) of the inflow side cells larger than that of the outflow side cells, the surface area of the inflow side cell surface where particulate matter and the like deposit increases to enables to suppress increase of the pressure loss.

In the case of manufacturing a plugged honeycomb structure where the size (area) of the cell openings of the inflow side cells are different from that of the cell openings of the outflow side cells are manufactured by bonding a plurality of plugged honeycomb structure segments, it is necessary to bond the plugged honeycomb structure segments so that all the inflow end faces of the segments face the same direction. Conventionally, whether all the inflow end faces of the honeycomb segments face the same direction or not has been confirmed by eye observation.
Patent Document 1: WO No. 2002/031371 pamphlet

US 4,759,892 describes a method of plugging cells of a honeycomb body. Masks are applied to ends of a honeycomb structure so that cells can be selectively plugged. One way of verifying the desired subset of cells is exposed for plugging is to optically view either end face of a structure having a pair of masks fitted or a structure having cells plugged at one end face and a mask fitted to its remaining end face to ascertain if light is passing through the structure between the end faces. Appropriately aligned masks should allow no light to pass through the structure in the area where cells are to be alternately plugged. An appropriate signal can be generated to indicate proper alignment is achieved and that the structure is ready for plugging or that alignment was not achieved.

US 2002/0135107 describes a method for plugging end faces of a honeycomb. A first end of a honeycomb is dipped into a photo-curing plugging resin. A second end is 'imaged' using a camera. The second end is masked. The cells which are to be plugged at the first end are left open in that mask.

Light is irradiated to the masked second end. Light enters the cells which have been left open. Therefore, the photo-curing resin at the first end of those cells (which remains from the initial dipping) is cured.

EP 0 433 582 describes another masking structure. A honeycomb has ceramic end caps formed on each end. The end caps are selectively perforated to open cells for plugging. Imaging analysis is used to identify the locations to be perforated.

### Disclosure of the Invention

However, the confirmation is performed visually, it requires extra manpower, and sometimes the inlet face facing the wrong direction is overlooked.

The present invention has been made in view of the aforementioned problems and aims to provide a method for bonding plugged honeycomb structures capable of efficiently inhibiting the direction of the end face of a plugged honeycomb structures from being reversed when a plurality of plugged honeycomb structures having different sizes of the cell opening between one end face and the other end face are bonded together.

In order to solve the aforementioned problem, according to the present invention, there is provided the following method for bonding plugged honeycomb structures.
[1] A method for bonding plugged honeycomb structures, the method comprising the steps of: disposing each of the honeycomb structures each having different sizes of cell openings between one end face and the other end face so that the end face on one side faces the imaging device side, imaging the end face on the one side with irradiating the end face with light beam, and confirming whether the structure of the end face imaged is the same as a preset structure of the end face on the one side or not for the plugged honeycomb structures by comparing the structure of the imaged end face with the preset structure of the end face on one side, and bonding the plugged honeycomb structure together at side faces so that the end faces on the one side face the same direction based on the structure of the end face confirmed.
[2] The method for bonding plugged honeycomb structures according to [1], wherein, in the case that the structure of the end face imaged is different from the preset structure of the end face on the one side, the plugged honeycomb structure is reversed and bonded so that the end face of the honeycomb structure faces the opposite direction, and, in the case that the structure of the end face imaged is the same as the preset structure of the end face on the one side, the honeycomb structures are bonded with being disposed in the unchanged direction.

According to a method for bonding plugged honeycomb structures of the present invention, one end face on the one side of each of the plugged honeycomb structures each having different sizes of cell openings between one end face (e.g. inflow end face) and the other end face (e.g., outflow end face) is imaged, whether the structure of the end face imaged is the same as a preset structure of an end face (e.g., inflow end face) on one side or not is confirmed, and the plugged honeycomb structures are bonded together at side faces so that the end faces (e.g., inflow end faces) on one side face the same direction based on the results of the confirmation. Therefore, without requiring manpower, the end faces of a part of the plugged honeycomb structures (segment) can efficiently be inhibited from facing the opposite direction.

### Brief Description of the Drawings

[Fig. 1] Fig. 1 is a cross sectional view schematically showing the disposition of a honeycomb structure and devices in one embodiment of a method for detecting a mask defect of an end face of a honeycomb structure of the present invention.
[Fig. 2A] Fig. 2A is a perspective view schematically showing a plugged honeycomb structure where the size of a cell opening of the inflow end face is larger than that of the outflow end face.
[Fig. 2B] Fig. 2B is an enlarged plan view showing a part of the inflow end face of a plugged honeycomb structure where the size of a cell opening of the inflow end face is larger than that of the outflow end face.
[Fig. 2C] Fig. 2C is a plan view showing a part of the outflow end face of a plugged honeycomb structure where the size of a cell opening of the inflow end face is larger than that of the outflow end face.
[Fig. 3] Fig. 3 is a bonded honeycomb segment assembly formed by bonding a plurality of HAC honeycomb structure at side faces thereof.

### Description of Reference Numerals

1: imaging device, 2: illuminator, 3: mask tape, 11: irradiation light beam, 12: reflected light, 21: plugged honeycomb structure, 22: inflow end face, 23: outflow end face, 31: cell, 32: partition wall, 33: inflow side plugging portion, 34: inflow side cell opening, 41: outflow side plugging portion, 42: outflow side cell opening, 51: bonded honeycomb segment assembly, a: central axis

### Best Mode for Carrying out the Invention

Next, an embodiment of the present invention will be described in detail with referring to drawings. However, the present invention is by no means limited to the following embodiment.

In one embodiment of a method for bonding plugged honeycomb structures of the present invention, in the first place, a plugged honeycomb structure (hereinbelow sometimes referred to as a HAC (High Ash Capacity) honeycomb structure) having different sizes of a cell opening between one end face and the other end face is disposed so that an end face on one side faces an imaging device side. Here, "end face faces an imaging device side" means that the normal line in the end face faces the imaging device side.

A HAC honeycomb structure used in the present embodiment has a similar structure as the plugged honeycomb structure (HAC honeycomb structure) 21 shown in Figs. 2A to 2C, and the structure is not particularly limited as long as the size (area) of the inflow side cell opening 34 is larger than that of the outflow side cell opening 42. Incidentally, the shape of a cross section (cell cross section) perpendicular to the central axis of each cell is fixed between both the end faces of the honeycomb structure. Since the HAC honeycomb structure used in the embodiment is obtained by combining a plurality of HAC honeycomb structures at side faces thereof, the shape of a cross section perpendicular to the central axial direction is preferably a polygon such as a quadrangle as shown in Fig. 2A or a hexagon. Alternatively, plural kinds of the aforementioned cross-sectional shapes may be employed. The HAC honeycomb structure used in the present embodiment is preferably formed of ceramic, more preferably formed of a ceramic containing silicon carbide as the framework such as SiC or Si-SiC.

Though there is no particular limitation on the method for disposing the HAC honeycomb structure so that an end face on one side faces the imaging device side, the following method is preferable in order to improve production efficiency. There are used a conveyor capable of conveying the HAC honeycomb structures and an imaging device disposed to be able to image the object conveyed to a specific position by the conveyer. It is preferable that the HAC honeycomb structure is put on the conveyor so that an end face on one side faces the imaging device side when the structure is conveyed to the specific position (position capable of imaging by the imaging device) and that the HAC honeycomb structure is conveyed to the aforementioned specific position by the conveyer to "dispose the structure so that an end face on one side faces the imaging device side". When the HAC honeycomb structure is put on the conveyer, it is preferable that the HAC honeycomb structure is put on the conveyer in such a manner that the end face to be imaged faces the imaging device when the HAC honeycomb structure has been conveyed to the position where the HAC honeycomb structure is imaged by the imaging device. For example, it is preferable that the imaging device is disposed to image the structure from the direction perpendicular to the conveyer-traveling direction and that the HAC honeycomb structure is put on the conveyer in such a manner that the central axis is perpendicular to the conveyer-traveling direction and that the preset end face on one side faces the imaging device side upon imaging the end face.

Though there is no particular limitation on the imaging device, a VGA camera or the like may be used. In addition, there is no particular limitation on the conveyer, and a known conveyer can be used.

Next, the end face facing the imaging device side is imaged with irradiating the end face with a light beam to confirm where the structure of the imaged end face is the same as the preset structure of the end face on one side or not. In the present embodiment, as shown in Fig. 1, an end face on one side of the plugged honeycomb structure 21 is allowed to function as the inflow end face 22, and the plugged honeycomb structure 21 is disposed in such a manner that the inflow end face 22 faces the imaging device 1 side, the inflow end face 22 is irradiated with a irradiation beam 11 by an illuminator 2, and the image of the inflow end face 22 by the reflected light 12 is taken. Then, the structure of the imaged end face is compared with the preset structure of an end face on one side to confirm where they are the same or not. In this case, if the structure of the inflow end face 22 is preset, the structure of the imaged end face is the same as the preset structure of an end face on one side.

Though there is no particular limitation on the method for confirming whether the structure on the imaged end face is the same as the preset structure of an end face on one side, the following method is preferable. A range is set to an area for one cell detected in such a manner that the range includes an area for one unplugged cell open in one end face and that the range does not include an area for one unplugged cell open in the other end face to judge each end face by detecting each imaged cell as a cell when each cell is within the range and by making the cell detection impossible when each cell is not within the range. That is, by presetting an end face on one side and image processing an image for processing obtained by imaging the present end face on the one side, an unplugged cell included in the range of the area for the preset one cell is recognized, and the area was calculated from the number of the recognized unplugged cells. Then, the end face whose direction of disposition is to be confirmed of the plugged honeycomb structure is imaged, and the obtained image for processing is subjected to image processing, the unplugged cell included in the range of the preset area for one cell is recognized, and the area is calculated from the number of the recognized unplugged cells. In the case that the area calculated out is the same as the whole area of the unplugged cell of the preset end face on one side, it means that the plugged honeycomb structure is disposed to face the right direction. At this time, in the case that the imaged cell of the end face on one side of the plugged honeycomb structure whose orientation is confirmed cannot be detected (case that no imaged cell is included in the range of the area for one preset cell on one side), it means that the imaged end face on the one side is the end face different from the preset end face on the one side and that the plugged honeycomb structure is not disposed to face a right direction. The aforementioned calculation processing (image processing) is preferably performed by the use of a computer. The "preset end face on one side" may be the inflow end face 22 or the outflow end face 23. For example, in the case that the inflow end face 22 is allowed to function as the "preset end face on one side", whether the structure of the end face imaged by the imaging device is the same as the structure of the inflow end face 22 or not is judged.

In the present invention, the "structure of the imaged end face is the same as the structure of the preset end face on one side" means that the size (area) and the disposition of the cell opening in the imaged end face is the same as the size (area) and the disposition of the cell opening of the preset end face on one side. It is also possible to focus on the "plugging portion" of each end face, and even if the size and the disposition of the plugging portions are the same, the same can be applied.

There is no particular limitation on a method of irradiation with a light beam as long as an end face is irradiated with a light beam capable of imaging by an imaging device. For example, a bar illuminator or a backlight illuminator can be employed.

Next, a plurality of HAC honeycomb structure is subjected to the aforementioned operation where an end face on one side of each of the HAC honeycomb structures is imaged to confirm whether the image is the same as the structure of the preset end face on one side or not. The aforementioned operation is performed with respect to a plurality of HAC honeycomb structure because the HAC honeycomb structures are bonded together as segments.

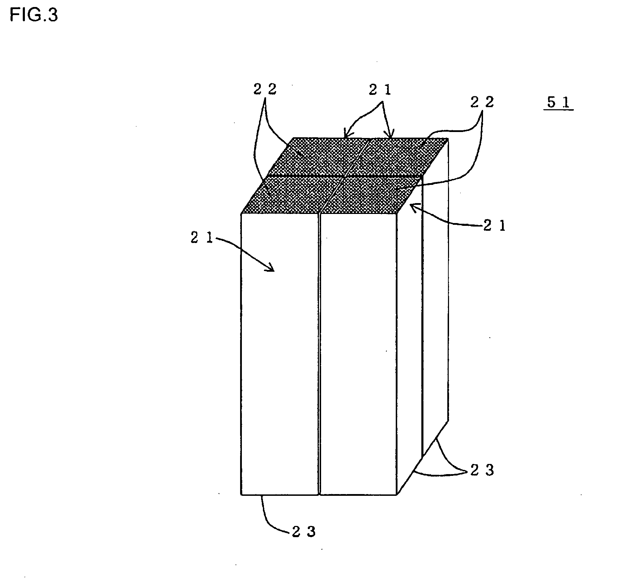

Next, based on the structure of the confirmed end face, the HAC honeycomb structures are bonded together at side faces in such a manner that end faces having the same structure face the same direction to obtain a bonded honeycomb segment assembly 51 formed by boning a plurality of HAC honeycomb structures 21 as shown in Fig. 3. Fig. 3 shows a bonded honeycomb segment assembly 51 formed by bonding a plurality of HAC honeycomb structures 21 at side faces thereof.

In the case that a plurality of HAC honeycomb structures (segments) are bonded at side faces thereof, it is preferable that they are automatically bonded by the use of a machine in order to improve production efficiency. For example, when a plurality of HAC honeycomb structures (segments) are conveyed by a conveyer to be automatically bonded at side faces thereof by the use of a machine, generally, the orientation of the end faces of the HAC honeycomb structures (segments) disposed on the conveyer is reflected in the orientation of the end faces upon bonding. That is, for example, in the case that all the inflow end faces of the HAC honeycomb structures (segments) face the same direction on the conveyer, the inflow end faces of all the segments upon automatically bonding the HAC honeycomb structures (segments) by a machine face the same direction. In contrast, in the case that the inflow end faces of some of the HAC honeycomb structures (segments) face opposite direction with respect to the direction of the inflow end faces of the other segments, regarding the inflow end faces upon automatically bonding the HAC honeycomb structures (segments) by a machine, the aforementioned inflow end faces of some of the HAC honeycomb structures face the direction opposite to the direction which the inflow end faces of the other end faces face.

Therefore, when the HAC honeycomb structures (segments) are automatically bonded at side faces thereof by the use of a machine, in the case that the end face structure imaged on the basis of the end face structure confirmed is different from the preset end face structure on one side, the HAC honeycomb structure is reversed so that the end face faces the opposite direction, and HAC honeycomb structures are bonded. In the case that the end face structure imaged is the same as the preset end face structure on one side, the HAC honeycomb structures are bonded without changing the orientation. Thus, the end faces having the same structure (end faces on one side) can face the same direction.

There is no particular limitation on the method for bonding the HAC honeycomb structures (segments), and a known method can be employed. For example, it is preferable that a bonding material is applied on a predetermined side face of each of the HAC honeycomb structures (segments) conveyed by a conveyer, that a plurality of HAC honeycomb structure (segment) is grasped and moved by an assembly device to combine them to have a predetermined structure in such a manner that side faces are bonded, thereby bonding adjacent HAC honeycomb structures (segments) together. When a plurality of HAC honeycomb structures (segments) are assembled, it is preferable that the end faces facing the same direction of the HAC honeycomb structures (segments) are disposed on the same plane. Though there is no particular limitation on the bonding material, SiC, colloidal silica or the like can be used.

When a plurality of HAC honeycomb structures (segments) are assembled, it is preferable to apply a bonding material on a side face as a bonding face. However, the bonding material applied on the side face may protrude on the end face side of the HAC honeycomb structure to cover a cell opening. Lest such a problem should be caused, it is preferable to stick a mask tape 3 on the end face of the HAC honeycomb structure (segment) 21 as shown in Fig. 1 before the bonding material is applied on the side face of the HAC honeycomb structure (segment). By sticking the mask tape 3, the bonding material can be inhibited from entering a cell opening. The mask tape 3 may be stuck on the end face before the HAC honeycomb structure (segment) is imaged or after it is imaged.

In the case of sticking a mask tape on the end face before the HAC honeycomb structure (segment) is imaged, the angle of the light beam with which the end face is irradiated with the central axis a of the HAC honeycomb structure (segment) is preferably 45 to 85°. When the angle is smaller than 45°, an image by the light (regular reflection light) formed by regular reflection of the irradiation light due to the mask tape may be taken, and it may be difficult to image the structure of the end face. When the image by the regular reflection light reflected by the mask tape is taken, a white image is obtained, and the structure of the end face does not appear. When the aforementioned angle is larger than 85°, it may be difficult to irradiate the end face well.

There is no particular limitation on the mask tape, and an adhesive tape obtained by applying an adhesive on a synthetic resin tape can suitably be employed. There is no particular limitation on the material for the synthetic resin tape, and heat-shrinkable polyester or the like may be employed. Though there is no particular limitation on the thickness of the synthetic resin tape, it is preferably about 30 to 50 µm. Though there is no particular limitation on the adhesive, an acrylic bonding material can be used.

There is no particular limitation on the assembly device as long as it can dispose a HAC honeycomb structure (segment) in a predetermined position by grasping the HAC honeycomb structure (segment) and move it to the predetermined position. It is preferable that the assembly device can dispose the HAC honeycomb structure (segment) with pressing it at a predetermined pressure.

### Example

Hereinbelow, the present invention will be described in more detail with referring to Examples. However, the present invention is by no means limited to the Examples.

### (Manufacture of plugged honeycomb structure)

There were mixed 80 parts by mass of a SiC powder and 20 parts by mass of a metal Si powder, and to the mixture were added starch and a resin balloon as pore formers and further added methyl cellulose, hydroxypropoxylmethyl cellulose, a surfactant, and water to prepare kneaded clay having plasticity (kneaded clay for forming). The kneaded clay was subjected to extrusion forming by the use of a die for forming the aforementioned honeycomb structure, followed by drying with microwaves and hot air to obtain a honeycomb formed article having a cell density of about 46.5 cells/cm² (300 cells/sq.in.), a square cross section having a side of 35 mm, and a length of 152 mm. The honeycomb formed article had a cell structure where the cells each having large cross section perpendicular to the central axis and the cells each having small cross section perpendicular to the central axis are alternately disposed as shown in Figs. 2A to 2C.

Next, the obtained honeycomb structure was subjected to plugging. A mask was applied on the openings of the cells each having a large cross section on the inflow end face side of the honeycomb structure obtained above, and the end portion on the inflow end face side was immersed in plugging slurry to form plugging portions. Further, regarding the end portion on the outflow end face side, a mask was applied on the openings of the cells each having a small cross section, and plugging portions were formed in the same manner as in the formation of plugging portions in the end portions on the inflow end face side. As the raw material for plugging, the same raw material as the raw material for the honeycomb formed article was used. Then, after drying, degreasing was performed at about 400°C in an ambient atmosphere, followed by firing at about 1450°C in Ar inert atmosphere to obtain a honeycomb segment (plugged honeycomb structure) having porous substrate where SiC crystal particles were bonded with Si.

### (Step of sticking mask tape)

On both the end faces of the honeycomb structure (segment) was stuck a transparent tape formed by applying an acrylic bonding material as an adhesive on a heat-shrinkable transparent tape. The thickness of the transparent tape was 50 µm, and the thickness of the acrylic bonding material was 40 µm.

### (Example 1)

The plugged honeycomb structure having different sizes of cell openings between the end face on one side and the end face on the other side obtained above was conveyed by a conveyer and disposed in such a manner that an end face on one side faces the imaging device side. As the imaging device, a VGA camera is used, and it was disposed to image from the direction perpendicular to the conveyer-traveling direction. Then, an end face on one side of the plugged honeycomb structure was imaged with irradiating the end face with a light beam to confirm whether the structure of the imaged end face was the same as the structure of the preset end face on one side. The irradiation with the light beam was performed at an angle of 73° with respect to the central axis of the plugged honeycomb structure. The structure of the preset end face on one side was the structure of the inflow end face, and the range was set in such a manner that the area of one cell to be detected includes an area for one unplugged cell open in an end face on one side and does not include an area for one unplugged cell open on the other end face. By imaging the preset end face on one side and subjecting the obtained image for processing to image processing, the unplugged cell included in the set range of an area for one cell was recognized, and the area was calculated out from the number of recognized unplugged cells. Then, by subjecting the image for processing obtained by imaging an end face on one side of the plugged honeycomb structure whose orientation was confirmed to image processing, an unplugged cell included in the set range of an area for one cell was recognized to calculate the area from the number of recognized unplugged cells. Then, whether the calculated area is the same as the entire area of the unplugged cells in the preset end face on one side or not was confirmed.

The aforementioned operation was performed for 16 plugged honeycomb structures, and the (16) honeycomb structures were bonded together at side faces thereof in such a manner that the end faces on one side (inflow end faces) face the same direction on the basis of the structures of the confirmed end faces to obtain a bonded honeycomb segment assembly. The bonding of the plugged honeycomb structures were performed by the use of an assembly device which can grasp each of the plugged honeycomb structures (segments) and move it to a predetermined position to dispose it in the predetermined position.

In the case that the structure of the imaged end face was different from that of the preset end face on one side (inflow end face), the plugged honeycomb structure was reversed so that the end face faced the opposite direction to bond the plugged honeycomb structures. In the case that the structure of the imaged end face was different from the structure of the preset end face on one side, the plugged honeycomb structures were bonded without changing the orientation. The operation of reversing the plugged honeycomb structure was manually performed.

### (Evaluation)

The bonding honeycomb segment assembly having no plugged honeycomb structure (segment) having an inflow end face facing the opposite side was recognized as "pass".

One hundred bonded honeycomb segment assemblies obtained by bonding plugged honeycomb structures (segments) were manufactured and evaluated. As a result, all the bonded honeycomb segment assemblies passed.

### Industrial Applicability

A method for bonding plugged honeycomb structures of the present invention is suitably used in the process of manufacturing a large-sized HAC honeycomb structure by bonding a plurality of HAC honeycomb structures (segments).

## Claims

1. A method for bonding plugged honeycomb structures (21), the method comprising the steps of:
disposing each of the honeycomb structures (21) each having different sizes of cell openings (34, 42) between one end face (22) and the other end face (23) so that the end face on one side (22) faces the imaging device (1) side, imaging the end face on the one side (22) with irradiating the end face with light beam (11), and confirming whether the structure of the end face imaged (22) is the same as a preset structure of the end face on the one side or not for the plugged honeycomb structures (21) by comparing the structure of the imaged end face (22) with the preset structure of the end face on one side, and
bonding the plugged honeycomb structure (21) together at side faces so that the end faces on the one side (22) face the same direction based on the structure of the end face confirmed.

2. The method for bonding plugged honeycomb structures (21) according to Claim 1, wherein, in the case that the structure of the end face imaged (22) is different from the preset structure of the end face on the one side, the plugged honeycomb structure (21) is reversed and bonded so that the end face of the honeycomb structure (22) faces the opposite direction, and, in the case that the structure of the end face imaged (22) is the same as the preset structure of the end face on the one side, the honeycomb structures (21) are bonded with being disposed in the unchanged direction.

## Patentansprüche

1. Verfahren zum haftschlüssigen Verbinden von verschlossenen Wabenstrukturen (21), wobei das Verfahren folgende Schritte umfasst:
Anordnen jeder der Wabenstrukturen (21), die jeweils verschieden große Zellöffnungen (34, 42) zwischen einer Endfläche (22) und der anderen Endfläche (23) aufweisen, sodass die Endfläche auf einer Seite (22) der Seite der Bildgebungsvorrichtung (1) gegenüberliegt, Abbilden der Endfläche auf der einen Seite (22) durch Bestrahlen der Endfläche mit einem Lichtstrahl (11) und Bestätigen, ob die Struktur der abgebildeten Endfläche (22) bei den verschlossenen Wabenstrukturen (21) die gleiche ist wie eine voreingestellte Struktur der Endfläche auf der einen Seite oder nicht, indem die Struktur der abgebildeten Endfläche (22) mit der voreingestellten Struktur der Endfläche auf einer Seite verglichen wird, und
haftschlüssiges Verbinden der verschlossenen Wabenstruktur (21) an Seitenflächen, sodass die Endflächen auf der einen Seite (22) basierend auf der Struktur der bestätigten Endfläche der gleichen Richtung zugewandt sind.

2. Verfahren zum haftschlüssigen Verbinden von verschlossenen Wabenstrukturen (21) nach Anspruch 1, wobei falls die Struktur der abgebildeten Endfläche (22) sich von der voreingestellten Struktur der Endfläche auf der einen Seite unterscheidet, die verschlossene Wabenstruktur (21) umgedreht und haftschlüssig miteinander verbunden wird, sodass die Endfläche der Wabenstruktur (21) der entgegengesetzten Richtung zugewandt ist, und falls die Struktur der abgebildeten Endfläche (22) die gleiche ist wie die voreingestellte Struktur der Endfläche auf der einen Seite, die Wabenstrukturen (21) haftschlüssig miteinander verbunden werden, während sie in der unveränderten Richtung angeordnet sind.

## Revendications

1. Procédé pour lier des structures en nid d'abeilles obturées (21), le procédé comprenant les étapes :
de placement de chacune des structures en nid d'abeilles (21) ayant chacune différentes tailles d'ouvertures de cellule (34, 42) entre une face d'extrémité (22) et l'autre face d'extrémité (23) de sorte que la face d'extrémité d'un côté (22) soit orientée vers le côté du dispositif de formation d'image (1), de formation d'une image de la face d'extrémité dudit côté (22) en irradiant la face d'extrémité avec un faisceau de lumière (11), et de confirmation si la structure de la face d'extrémité (22) dont l'image a été formée est identique à une structure prédéterminée de la face d'extrémité dudit côté ou non pour les structures en nid d'abeilles obturées (21) en comparant la structure de la face d'extrémité (22) dont l'image a été formée avec la structure prédéterminée de la face d'extrémité dudit côté, et
de liaison des structures en nid d'abeilles obturées (21) les unes aux autres au niveau des faces latérales de sorte que les faces d'extrémité dudit côté (22) soient orientées dans la même direction sur la base de la structure de la face d'extrémité confirmée.

2. Procédé pour lier des structures en nid d'abeilles obturées (21) selon la revendication 1, dans lequel, dans le cas où la structure de la face d'extrémité (22) dont l'image a été formée est différente de la structure prédéterminée de la face d'extrémité dudit côté, la structure en nid d'abeilles obturée (21) est inversée et liée de sorte que la face d'extrémité (22) de la structure en nid d'abeilles soit orientée dans la direction opposée, et, dans le cas où la structure de la face d'extrémité (22) dont l'image a été formée est identique à la structure prédéterminée de la face d'extrémité dudit côté, les structures en nid d'abeilles (21) sont liées en étant disposées dans la direction inchangée.
